(19) 

Europäisches Patentamt
European Patent Office
Office européen des brevets

(11)  **EP 2 009 811 A1**

(12)  **EUROPEAN PATENT APPLICATION**

(43) Date of publication:
**31.12.2008 Bulletin 2009/01**

(51) Int Cl.:
*H04B 7/04* (2006.01)          *H04B 7/06* (2006.01)
*H04Q 7/36* (2006.01)

(21) Application number: **08158389.0**

(22) Date of filing: **17.06.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (71) Applicant: **Elektrobit Wireless Communications Ltd.**<br>**90570 Oulu (FI)** |
| (30) Priority: **28.06.2007 US 769973** | (72) Inventor: **Ylitalo, Juha**<br>**FI-90540, Oulu (FI)** |
| | (74) Representative: **Määttä, Jukka Tapani**<br>**Berggren Oy Ab**<br>**Kirkkokatu 9**<br>**90100 Oulu (FI)** |

(54)  **A transmission method for common channels**

(57)    The invention relates to a method and base station arrangement by which broadcast info messages can be transmitted using cyclic delays and a beamformer to the whole cell simultaneously. In the method during the broadcast info transmission cyclic delays are introduced to the transmitted symbols before the symbols are fed to a beamformer. The delayed symbols are transmitted using antennas connected to the beamformer. By utilizing cyclic delays dead zones can be avoided in the cell or sector. The method can be utilized for example in WiMAX, WiFi, UMTS or 3$^{rd}$ LTE networks.

Fig. 2

**Description**

**Technical field of the invention**

The invention relates to a method for transmitting common channels in a cellular telecommunication network. The invention also relates to a transmission arrangement used in the implementation of the method.

**Background of the invention**

Cellular telecommunication systems like GSM (Global System for Mobile Communication), UMTS (Universal Mobile Communications System) and WiMAX (Worldwide Interoperability for Microwave Access) utilize common broadcast channels to keep the mobile stations belonging to the network aware of when a mobile station can either receive or transmit messages. The common broadcasts can also disclose messages concerning mobility management of the network. In the following all those signals which are transmitted to multiple mobile users, are considered as a common or a broadcast signal, i.e. a broadcast info. These signals may carry any kind of control signaling or reference signaling such as the common pilot signals. The common or broadcast signals are often transmitted to the entire cell or sector. The common pilot channels in UMTS and the frame start preamble in WiMAX are examples of broadcast channels. Multimedia Broadcast Multicast Service (MBMS) is another example of a broadcasting signaling approach which can be offered via existing GSM and UMTS cellular networks. For example, a mobile radio or a mobile television service such as DVB-h or similar are also considered as broadcast signals.

There are several possibilities to transmit messages for common broadcast. One possibility is to utilize one omnidirectional antenna. In that case the entire cell around a base station can be managed. Another possibility is to divide the surroundings of the base station to sectors with separate sectorized antennas and transmit inside one sector with one antenna.

For increasing transmission capacity or suppressing fading problems in a certain area it is possible to use different kinds of diversity techniques. One known diversity technique is space diversity where multi-antenna systems can be utilized.

Multi-antenna techniques enable the creation of several narrow antenna beams by an antenna array. The beams are defined by phase differences between different antennas in the array. Due to the phase differences, narrow beams can be defined which have a high gain in a desired radiation direction. One simple antenna constellation includes a Uniform Linear Array (ULA) with inter-element spacing of one half of a wavelength and a phase shifting Butler matrix. Also non-orthogonal phase shifting matrices can be applied. Another possibility is to employ a non-linear antenna array which has varying inter-antenna spacing and which requires a specific phase shifting matrix for beam forming.

The utilized phase differences can also be changeable (adaptive). In that case narrow beams are formed according to the directions of the users. The phase shifts between antennas can be changed adaptively so that user directions are tracked. Therefore the preferable direction and width of the beam can be controlled.

One example of a technique using fixed phase differences is the so-called fixed beam technique. In the fixed beam technique, directions and widths of the antenna beams are fixed beforehand by the utilized phase differences and amplitude weights. The needed phase difference in the fixed beam system can be formed using a so-called beamformer before actual antennas. The beamformer can be implemented for example using analog delay lines.

One well-known way to implement a beamformer by analog delay lines or phase shifters is to utilize a Butler matrix. A **M** x **M** Butler matrix can create **M** spatially orthogonal beams by using **M** antennas. An abbreviation **M** equals $2^n$ where n = 1, 2, 3, etc.

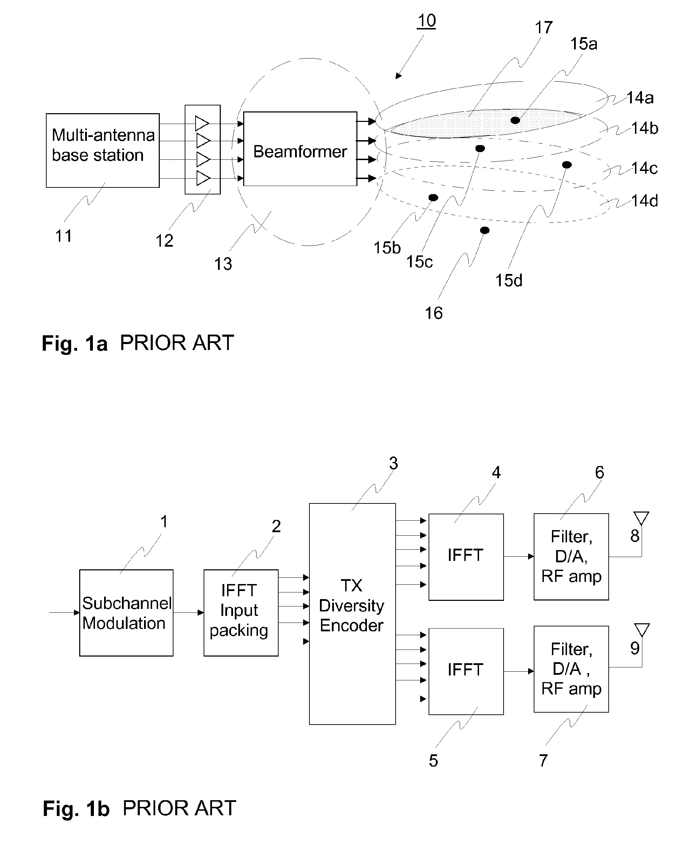

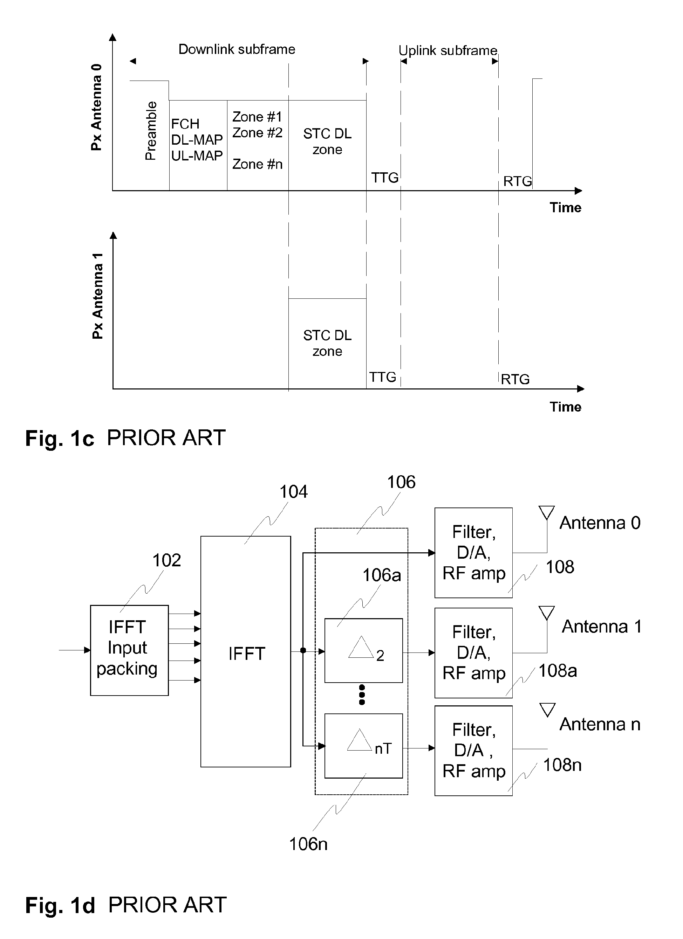

Fig. 1 a depicts one example of a transmission system 10 where four fixed beams 14a, 14b, 14c and 14d are defined by using a beamformer 13. The beamformer 13 can be implemented for example by a **4 x 4** Butler matrix. Four inputs to the beamformer 13 come from a multi-antenna base station 11. Between the multi-antenna base station 11 and beamformer 13 are RF power amplifiers 12. Due to its structure the Butler matrix based beamformer 13 can be integrated as a part of the utilized antenna array.

The beamformer 13 of Fig. 1a can create four distinct antenna beams 14a, 14b, 14c and 14d. In Fig. 1a are also depicted four mobile stations 15a' 15d which are inside at least one of the defined fixed beams. As an example one depicted mobile station 16 can not be reached with any of the four fixed antenna beams.

When the base station 11 transmits in a dedicated channel to one of the mobile stations it uses one of the fixed beams. For example mobile station 15d can be reached using in transmission fixed beam 14c.

The situation is different if the base station 11 transmits on a common broadcast channel a message to all mobile stations which can camp in the base station 11. The common broadcast transmission should cover the whole cell, i.e. an area of all depicted four fixed beams. However, if common broadcast is transmitted in all fixed beams simultaneously then for example mobile station 15a could receive a corrupted message because it locates in an area 17 where two fixed beams 14a and 14b overlap creating occasionally a so-called dead zone. A dead zone develops when the same signal from two adjacent beams adds up destructively in areas where the beams overlap. Moreover, if the same common signal is input to the four narrow beams simultaneously the resulting composite beam pattern gets narrow so that uniform common channel coverage is not obtained over the entire sector. Therefore, it is not advisable to transmit common broadcast messages simultaneously with all fixed beams.

The problem depicted above can be solved by providing an additional sector antenna to the antenna array or using only one of the array antennas as a transmitter antenna for the whole sector coverage. One antenna solution may be problematic from implementation point of view since broadcast signals require a separate signal path (=cable) from the baseband unit to the antenna array. Moreover, an array (beamforming) gain is not achieved to the common (broadcast) channels if only one antenna is used and then for example mobile station 15d in Fig. 1a could not be reached.

Another solution could be a careful phase angle adjustment between the beams to reach a composite beam which has fairly good sector coverage without overlapping dead zones in azimuth directions. This approach is not very effective in practice and requires very accurate calibration between different antenna branches.

WiMAX implementations follow IEEE 802.16 and IEEE 802.16e standards. WiMAX transmission technique utilizes OFDM (Orthogonal Frequency-Division Multiplexing). According to the mentioned standards WiMAX systems can utilize also multi-antenna techniques.

Fig. 1b depicts as an example a WiMAX base station system where two antennas, references 8 and 9, are utilized. The simplified transmission system comprises also a subchannel modulation unit 1, IFFT input packing unit 2 (Inverse Fast Fourier Transform) and transmit diversity encoder 3. After the transmit diversity encoder 3 there are two separate antenna branches. Both of them have their own IFFT unit for fulfilling the OFDM modulation, references 4 and 5, and a block comprising a filter, D/A converter and RF amplifier, references 6 and 7. Signals are transmitted using antennas 8 and 9.

WiMAX supports various modes of multi-antenna techniques. From practical implementation point of view the fixed beam method is the simplest one, which still brings the major benefits of the beamforming to system performance.

In WiMAX specification IEEE 802.16 in chapter 8.4.8 δSpace-Time Coding□it is said that in the MIMO case (Multiple Input Multiple Output) a preamble and other non-MIMO zones are transmitted with single antenna only (antenna 0). This means that the same applies also to a case where an adaptive antenna system (AAS) is utilized.

Fig. 1c depicts a simplified example depicting subframes of a WiMAX system using TDD (Time Division Duplex) and two transmission antennas in downlink. For example an RF unit would imply transmit power profiles of Fig. 1c assuming fully loaded OFDMA symbols in the TDD system. A downlink subframe can comprise following exemplary zones. The downlink subframe starts with a preamble which is transmitted using antenna 0. The preamble is followed by PUSC zones (partial Usage of SubChannels). In the example PUSC includes FCH (Frame Control Header), DL-MAP (DownLink MAP) and UL-MAP (UpLink MAP). They can be followed by several user zones #1, #2," #n. In the depicted example also these user zones are transmitted with one antenna only (antenna 0). After last PUSC zone #n begins an STC DL zone where STC (Space Time Coding) can be utilized. In the STC DL zone both antennas (antenna 0 and antenna 1) are transmitting. The depicted downlink subframe ends to TTG period (Transmit/receive Transition Gap). After the TTG period an uplink subframe starts. The uplink frame ends to an RTG period (Receive/transmit Transition Gap). After the RTG period a new downlink subframe begins.

It is noteworthy that in an unloaded case the first OFDMA symbols including the frame start preamble and MAP info would be still transmitted but only from antenna 0 in non-STC zones. In a WiMAX base station RF unit a calibration of the power amplifier is based on the preamble transmission, but the preamble is not sent according to the standard from the second transmitter (antenna 1).

In WiMAX it is possible to utilize also FDD (Frequency Division Duplex) where downlink and uplink use different frequencies. When utilizing FDD new downlink subframe begins immediately when the preceding downlink subframe has ended. However, this does not change the structure of the beginning of the new subframe. It comprises also a preamble and FCH, DL-MAP and UL-MAP zones.

CDD (Cyclic Delay Diversity) is known to be used for introducing spatial diversity to an OFDM system that itself has no built-in diversity. In a CDD system signals at individual transmitter beams can be transmitted delayed to each other. This causes an artificial spread of the signal in time direction, which increases frequency selectivity seen by a receiver. One example of using CDD in OFDM system for creating spatial diversity is disclosed in WO2006/021228.

Fig. 1d depicts a simplified example of an OFDM system utilizing CDD. Symbols to be transmitted are processed in IFFT input packing block 102 and after that an inverse Fourier transform is taken in an IFFT block 104. After that the OFDM signals are split and fed to a CDD unit 106 having n branches. It comprises n pieces of cyclic delay units each having a different delay, references 106a, " , 106n. The difference between two adjacent delay units is $\square_{cy}$. In a CDD system one transmitter branch uses zero delay. In the depicted example zero delay signal is fed to a unit 108 which comprises a filter, D/A converter and RF amplifier. From block 108 the amplified zero delay signal is fed to antenna 0.

The other antenna branches have a cyclic delay unit (references 106a,", 106n) between IFFT block 104 and units comprising a filter, D/A converter and RF amplifier blocks (references 108a,", 108n). The cyclic delay units cause a predetermined cyclic delay $\square_{cy}$ to signals in each antenna branch. When OFDM transmission is accomplished the depicted CDD system spreads transmitted signals in time which increases frequency selectivity at receiver antenna.

CDD systems are simple because they utilize delays which are multiples of the system sampling time. If an arbitrary delay is needed, then phase diversity (PD) system could be used instead of CDD system. However, a PD system is more complex in structure because the delay operation to the signals must be done before OFDM modulation, i.e. n pieces of OFDM transformations must be made. This makes the PD system more complex than the CDD system.

In CDD or PD systems multipath signals are needed to provide increased frequency selectivity in the receiver. However, in line of sight environment where one strong signal path is present no advantages can be attained by using CDD or PD systems.

Therefore, in a multi-antenna transmitter system there exist problems about how to transmit common broadcast messages which should cover a whole cell area:

' How to provide full sector coverage for frame start which includes broadcast info such as for example a preamble and first PUSC zones in WiMAX system utilizing beamforming?
How to get the beamforming gain for the frame start preamble and first PUSC zones if beamforming is utilized in a base station?
' How to calibrate beam-specific power amplifiers in antenna branches if e.g. only frame start preamble and basic PUSC zones are transmitted in a beamforming base station?

**Summary of the invention**

The aspects of the present invention are to provide a method and a transmitter arrangement which solve a problem of transmitting broadcast info to the entire cell or sector if beamforming is utilized.

The aspects of the invention are achieved by a method and a transmitter arrangement where cyclic diversity delay (CDD) or phase diversity (PD) is utilized together with beamforming when transmitting broadcast info in the whole cell or sector. The beamforming can be either fixed or adaptive. By applying CDD or PD with beamforming entire cell coverage can be attained where no dead zones are created in certain azimuth directions. If CDD or PD is applied the beamforming gain can also be achieved to the broadcast info signals (for example frame preamble, FCH, UL-MAP and DL-MAP in WiMAX systems).

The invention has the advantage that a beamforming gain is achieved for the broadcast info signals, for example preamble and MAP info, which improves the robustness of the initial synchronization of the terminals.

Another advantage of the invention is that it allows very simple and practical implementation for broadcast info signals in a fixed beam system.

Yet another advantage of the invention is that it enables a use of a simple mobile station receiver structure.

Yet another advantage of the invention is that it can be implemented in an OFDMA system without any changes to the specification; the approach does not affect to the mobile terminal functionality and the mobile terminal does not need to know whether CDD is used or not.

Yet another advantage of the invention is that the common channels and the dedicated channels have exactly the same coverage area in the cell or sector.

Yet another advantage of the invention is that for example, with 4-antenna fixed beam system the transmitter power can be reduced by a factor of 4, whereby the power efficiency of the base station would increase. Alternatively, the coverage of the base station can be significantly increased.

Yet another advantage of the invention is that it improves the robustness of synchronization and transfer of the common control information in a WiMAX terminal case.

Yet another advantage of the invention is that user-specific beamformed bursts, i.e. STC, AAS, or AMC zones (Adaptive Modulation and Coding), can be transmitted in the best beam for that user. The best beam can be estimated from the uplink signal if fast mobiles need to be supported or seam selection feedback commands can be used.

Furthermore, the invention has the advantage that it enables straightforward calibration of the power amplifiers.

Some advantageous embodiments of the invention are presented in the dependent claims.

The basic idea of the invention is the following: A multi-antenna base station can transmit downlink to a particular mobile station by utilizing beamforming, either fixed or adaptive. In the method according to the invention all common broadcast info signals are conveyed simultaneously to beamformer inputs using cyclic delays. During broadcast info transmission only a single narrow beam transmits signals without any delay to a beam-specific direction. The same broadcast signals with different cyclic delays are transmitted via the other narrow beams with their specific beam directions. The generated delays together with beamforming bring about an antenna beam which can cover the whole cell or sector. After common broadcast info transmission the base station may or may not disconnect the cyclic delay unit to the beamforming unit. Therefore, the same narrow transmitter beams can be formed both for the common channels and the dedicated user channels.

Further scope of applicability of the present invention will become apparent from the detailed description given hereafter. However, it should be understood that the detailed description and specific examples, while indicating preferred embodiments of the invention, are given by way of illustration only, since various changes and modifications within the spirit and scope of the invention will become apparent to those skilled in the art from this detailed description.

**Brief description of the drawings**

Fig. 1 a    shows a prior art fixed beam beamformer system;

Fig. 1 b    shows a simplified prior art transmitter system;

Fig. 1c    shows an example of downlink subframes utilized in the WiMAX system of Fig. 1 b;

Fig. 1d    shows a prior art cyclic delay diversity system;

Fig. 2    shows an example of transmitter system according to the invention;

Fig. 3    shows an example of a cyclic delay unit connected to a beamformer; and

Fig. 4    shows, as an exemplary flow chart, the main steps of transmitting broadcast info.

**Detailed description**

Figures 1a' 1d were explained above in connection with the description of the prior art.

The basic idea of the cyclic delay diversity is in the property of the discrete Fourier transform. A cyclic delay performed in the time domain corresponds to a linear phase shift in the frequency domain. In OFDMA terms, performing a cyclic delay of **x** samples after IFFT creates a linear phase rotation in subcarrier dimension. That is, a phase shift of the k:th subcarrier is:

$$\Box_{cy, k} = 2\Box x\mathbf{k} / \mathbf{N_{fft}} \qquad\qquad (1).$$

For example if (**a0, a1, a2, a3**) is a stream of four samples **($N_{fft}$ = 4)** of one OFDMA symbol without the cyclic delay then a cyclic delay operation with a delay of two samples transforms the original stream to a delayed stream:

$$(\mathbf{a0}, \mathbf{a1}, \mathbf{a2}, \mathbf{a3}) \qquad \Box \qquad (\mathbf{a2}, \mathbf{a3}, \mathbf{a0}, \mathbf{a1}) \qquad (2)$$

Thus two samples from the end of the original symbol have been moved to the beginning of the delayed symbol. As the cyclic delay operation is done before the cyclic prefix it preserves the ISI protection (Inter Symbol Interference) for the multipath propagation which is achieved by using a cyclic prefix (CP). The samples of both streams are advantageously transmitted from two narrow beams of a transmitter at the same time, i.e. in the example above symbol **a0** is transmitted from the first beam at the same time as **a2** is transmitted from the second beam and symbol **a1** is transmitted from the first antenna at the same time as **a3** is transmitted from the second antenna etc.

The delay parameter $\Box_{cy, k}$ between antenna branches should set in an appropriate way. It should not be too long because with a long delay the channel varies too rapidly in subcarrier domain for the mobile station to perform channel estimation using the pilot subcarriers. On the other hand the delay should be not too short to provide benefits of the increased frequency selectivity. Actually, the mobile station does not need to know whether cyclic delay diversity is used or not, if the delay parameter $\Box_{cy, k}$ is selected in a reasonable way. However, even short delays are beneficial since they break down fixed dead zones in the composite beam directions. It is also possible to vary the cyclic delay on frame by frame basis.

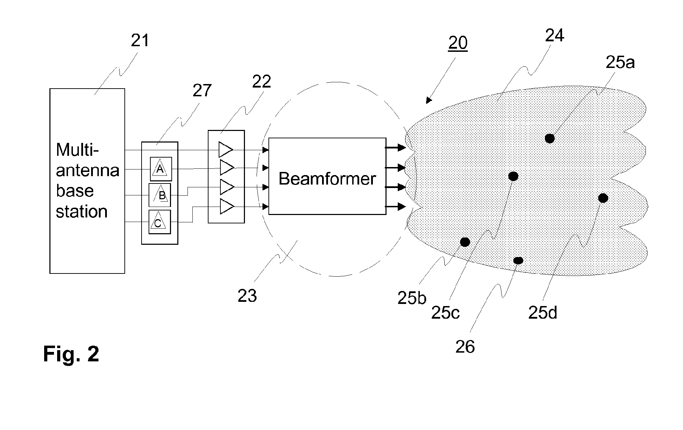

Fig. 2 shows an example of a transmission system 20 where the inventive idea has been applied. The depicted transmission system 20 comprises a multi-antenna transmitter with four transmitter antennas. A depicted multi-antenna base station 21 can be for example an UMTS, 3GPP LTE (3rd Generation Partnership Project Long Term Evolution), WiFi (Wireless Fidelity), or WiMAX base station which utilizes beamforming. The depicted beamformer 23 can be for example the beamformer 13 of Fig. 1 a. The beamformer 23 is therefore capable of building narrow fixed beams as was depicted in Fig. 1 a.

In one advantageous embodiment the fixed beams of Fig. 1 a are orthogonal. Orthogonal beams can be created for example by a proper Butler matrix.

In one advantageous embodiment the beamformer can create beams which can be adapted to the radio channel by adjusting beam directions, beam widths or beam patterns.

In one advantageous embodiment the beamformer unit and the antenna array are replaced by separate narrow-beam, high-gain antennas which are directed in different directions within the sector of interest.

RF amplifiers are depicted with reference 22. The RF amplifier block comprises in the example of Fig. 2 four RF amplifiers. Each of the RF amplifier outputs are connected to one beamformer input. The beamformer 23 can be implemented for example by a **4 x 4** Butler matrix which creates four antenna beams. In general, an MxM Butler matrix can be used to generate M orthogonal beams. Also N non-orthogonal beams can be generated with M-antenna array using a NxM phase shift matrix. An advantage of the Butler matrix implementation is that it is very simple and no online calibration is needed for the beams. The beams and the analog Butler matrix can be calibrated in the production line in once-in-a-lifetime process. The depicted RF amplifier block 22 can be integrated either in the antenna structure or in the base station 21.

A cyclic delay unit 27 according to the invention lies between multi-antenna base stations 21 outputs and RF amplifiers 22. In one preferred embodiment of the invention the cyclic delay unit is a part of the baseband unit. The number of the multi-antenna base station outputs can vary but it is usually the same as the number of antennas in the antenna array. The outputs are configured to convey in parallel several symbols either to the delay unit 27 or RF amplifiers 22. Fig. 2 depicts four exemplary multi-antenna base station outputs. However, the invention is not limited to the depicted number of multi-antenna outputs but it can vary depending on the utilized beamformer structure.

In the example of Fig. 2, during transmission of broadcast info the delay unit 27 is connected to three outputs of the multi-antenna base station 21 and to three inputs of the RF amplifier 22. Only one multi-antenna base station output, which is going to a reference antenna, is not connected to the delay unit 27. This signal line bypasses the cyclic delay unit. In one preferred embodiment of the invention the cyclic delays are applied only to the transmission of the broadcast info. As this info ends the delay unit 27 is disconnected from the multi-antenna base station outputs of the dedicated channels. At baseband processing this is a simple task since the broadcast info and the dedicated channels are processed separately. After disconnection outputs of the multi-antenna base station 21 are connected directly to the inputs of RF amplifiers 22.

In another preferred embodiment of the invention the cyclic delays are applied to the transmission of both the broadcast channels and the dedicated channels.

In the example of Fig. 2 the CDD unit 27 comprises three cyclic delay units **A, B** and **C**. Generated exemplary delays **A, B** and **C** are different for each narrow beam.

In Fig. 2 with reference 24 is depicted a combined antenna beam which is utilized during broadcast info transmissions. The depicted antenna beam 24 is created by connecting outputs of the cyclic delay unit 27 to the corresponding beamformer 23 inputs. One signal line is not delayed and it is connected directly to reference beamformer input. The created composite beam 24 is as wide as the original fixed beams together. Also the beamformer gain is attained and this increases the reliable connection coverage of the base station. In the depicted example of Fig. 2 the created composite beam covers the whole cell. Therefore mobile terminals 25a' 25d and 26 can be reached with the antenna beam 24 during broadcast info transmissions.

In one advantageous embodiment of the invention transmitter beams are formed using several distinct narrow beam antennas. The antennas can be directed in different directions. In that embodiment a separate beamformer is not needed.

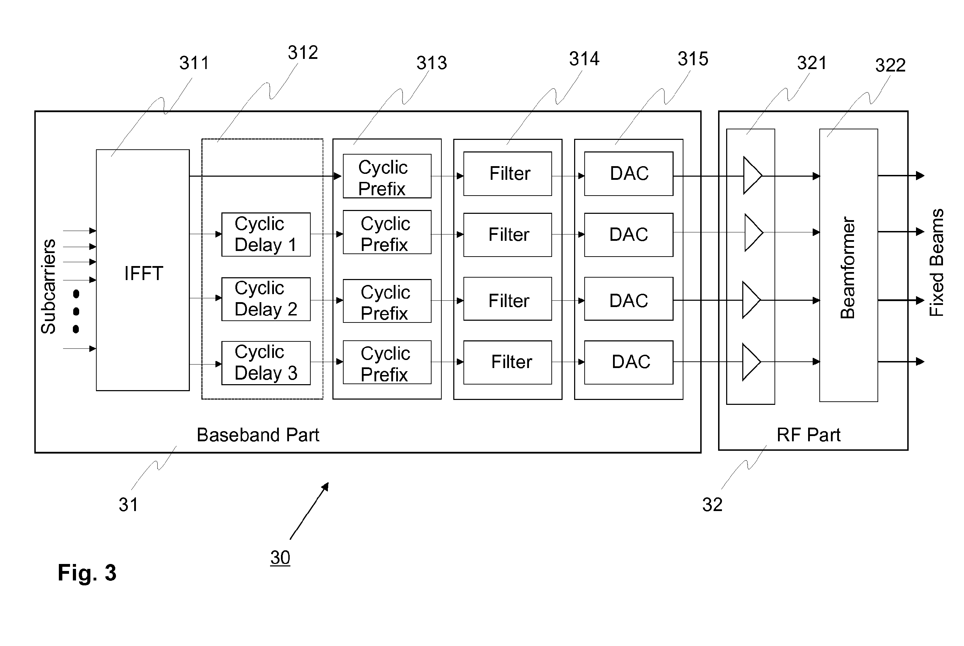

The principle of the inventive fixed beam scheme with cyclic delay diversity is depicted in the example of Fig. 3. The example of Fig. 3 comprises four transmitter antennas. In the example of Fig. 3 four fixed beams can be created for transmission or receiving.

The transmitter system 30 according to the invention comprises two main functional blocks. Baseband part 31 comprises an OFDM modulator 311 whereto subcarriers are inputted, a cyclic delay unit 312, cyclic prefix units 313, digital filters 314 and digital-to-analog converters (DAC) 315.

The RF part 32 comprises an RF amplifier block 321 and a beamformer 322. The actual four transmitter antennas connected to the beamformer 322 are not shown in Fig. 3.

The cyclic delay unit 312 is connected between the OFDM modulator 311 outputs, which are implemented by fast inverse Fourier transform, and the cyclic prefix unit 313 inputs.

In one advantageous embodiment the cyclic delays can be changed either on symbol by symbol or frame by frame bases.

Outside the broadcast info transmissions the cyclic delay unit 312 may be disconnected. This is displayed by a broken line which surrounds the three depicted cyclic delay circuits. In that situation OFDM modulator 311 outputs are connected directly to the inputs of the cyclic prefix unit 313. The cyclic prefix unit 313 is utilized to safeguard a proper inter symbol interference (ISI) protection between transmitted symbols.

The outputs of cyclic prefix unit 313 are connected to inputs□digital filters 314. Filter outputs are connected to digital-to-analog converters (DAC) 315. The outputs of the DACs are connected to inputs of the RF amplifier unit 321. The outputs of the RF amplifiers are connected to inputs of the beamformer 322. The beamformer 322 can be implemented advantageously e.g. by a **2x2, 4x4**, or **8x8** Butler matrix. In one advantageous embodiment the RF amplifiers and the Butler matrix are integrated to one functional device. In that case calibration of the power amplifiers is only needed during manufacturing of the antenna structure.

The beamforming function can also be achieved at digital baseband but it then requires a good online calibration system over all the transmitter and receiver antenna branches.

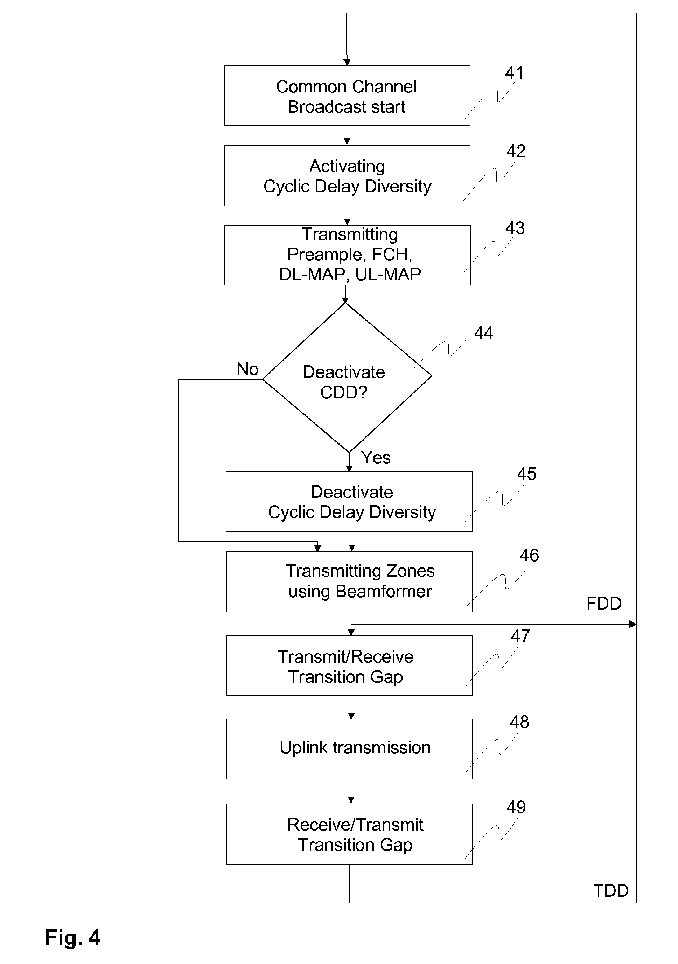

Fig. 4 shows the main steps of the procedure according to the invention as an exemplary flow chart. The flowchart depicts functioning of a TDD system. However, it could also be utilized in a FDD system. The depicted flow chart uses as an example properties of a WiMAX system. However, the invention is not limited to WiMAX system. It can for example be utilized also in UMTS or 3rd GPP LTE base stations.

The process starts from step 41 where a downlink period begins. It means that also broadcast info transmission should be started. Before the start of broadcast info transmission a cyclic delay unit 312 is connected between the OFDM modulator 322 outputs and cyclic prefix 313 inputs in step 42 if it is disconnected earlier.

In step 43 broadcast info is transmitted to all mobile stations which are camping in the base station. In a WiMAX case it means transmission of a preamble, FCH, DL-MAP and UL-MAP zones in the beginning of the downlink subframe.

When the broadcast info transmission ends then in step 44 the cyclic delay unit 312 can be disconnected. In that case the CDD unit is deactivated in step 45.

In one advantageous embodiment the CDD unit is kept connected. In that case the process moves from step 44 directly to step 46.

Thereafter in step 46 user data can be transmitted in various permutation modes such as the FUSC (Full Usage of SubChannels), PUSC, STC, AMC (Adaptive Modulation and Coding) or AAS (Adaptive Antenna Systems) zones. During such transmission beamforming can advantageously be utilized. A Butler matrix can be utilized in the beamformer implementation.

In an FDD system new downlink subframes are transmitted immediately when the preceding downlink has ended, i.e. the process returns to step 41 and the process for sending a downlink subframe restarts.

In a TDD system downlink transmission ends to a Transmit/Receive Transition Gap (TTG) in step 47. After that follows in a time division duplex (TDD) system an uplink subframe, step 48. The uplink transmission ends in step 49 to a Receive/Transmit Transition Gap (RTG).

In the TDD system when the base station notices RTG then it moves to transmission state and the transmission process restarts from step 41. However, the new subframe can comprise differently allocated permutation zones.

A feature that is essential with regard to the implementation of the invention is the creation of cyclic delays for broadcast info transmissions. All the measures for making OFDM modulation, creating specific delays according to the invention, adding cyclic prefixes to the signals to be transmitted and digital filtering can advantageously be performed in a baseband processor unit of a base station.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

**Claims**

1.  A method for transmitting broadcast info, **characterized in that** the method comprises:

    ' introducing delay diversity to the broadcast info symbols (42),
    ' conveying the delay diversified broadcast info symbols to an antenna array (43), and
    transmitting the broadcast info symbols simultaneously with narrow beams (43).

2.  The method according to claim 1, **characterized in that** the narrow beams (14a ' 14d) are defined by a beamformer (13) with a uniform linear antenna array or distinct narrow beam antennas.

3.  The method according to claim 1, **characterized in that** the delay diversity is accomplished by cyclic delay diversity (312).

4.  The method according to claim 3, **characterized in that** the cyclic delay diversity is accomplished by fixed delays with different lengths for different beams or by variable delays with different lengths for different beams.

5. The method according to claim 4, **characterized in that** the variable cyclic delays are accomplished on either symbol by symbol or frame by frame basis.

6. The method according to claim 1, **characterized in that** the delay diversity is accomplished by phase diversity.

7. The method according to claim 1, **characterized in that** the utilized beams (14a ' 14d) are orthogonal and created by using a Butler matrix (322).

8. The method according to claim 1, **characterized in that** said broadcast info symbols are OFDM symbols of WiMAX, WiFi or 3rd GPP LTE networks.

9. The method according to claim 1, **characterized in that** in said broadcast info symbols are UMTS broadcast info symbols.

10. A multi-antenna base station (21) comprising:

   a modulator (311) for modulating broadcast info symbols,
   ' a delay unit (312) for introducing delays to the modulated broadcast info symbols,
   ' an RF amplifier (321) for amplifying the broadcast info symbols, and
   ' an antenna array for transmitting the broadcast info symbols using multiple narrow beams.

11. The multi-antenna base station according to claim 10, **characterized in that** the narrow beams are defined by a beamformer (322) or by distinct narrow beam antennas.

12. The multi-antenna base station according to claim 10, **characterized in that** the delay unit is a cyclic delay unit (312).

13. The multi-antenna base station according to claim 12, **characterized in that** the cyclic delay unit (312) comprises fixed delays with different lengths for different beams.

14. The multi-antenna base station according to claim 12, **characterized in that** the cyclic delay unit (312) is configured to vary utilized delays of the cyclic delay unit either on symbol by symbol or frame by frame basis.

15. The multi-antenna base station according to claim 11, **characterized in that** the beamformer (322), which is implemented by a Butler matrix, is configured to create orthogonal beams.

16. The multi-antenna base station according to claim 10, **characterized in that** the modulator (311) is an OFDM modulator of a WiMAX, WiFi or 3rd GPP LTE base station.

17. The multi-antenna base station according to claim 10, **characterized in that** the multi-antenna base station (21) is a UMTS base station.

18. A multi-antenna base station (21) comprising:

   ' a means (311) for modulating broadcast info symbols,
   ' a means (321) for amplifying the broadcast info symbols,
   ' a means (322) for defining transmitter beams, and
   multiple antennas for transmitting the broadcast info symbols using multiple transmitter beams, **characterized in that** the multi-antenna base station (21) further comprises a means (312) for introducing delays to the modulated broadcast info symbols.

19. The multi-antenna base station according to claim 18, **characterized in that** the means for defining transmitter beams comprises a beamformer (321).

20. A computer program, **characterized in that** it comprises program code means adapted to:

   ' detect broadcast info transmission,

' create cyclic delays for broadcast info symbols, and
' convey the delayed signals to a beamformer,

when the program is run on a computer.

**Fig. 1a** PRIOR ART

**Fig. 1b** PRIOR ART

**Fig. 1c** PRIOR ART

**Fig. 1d** PRIOR ART

**Fig. 2**

**Fig. 3**

Baseband Part

- IFFT — 311
- Cyclic Delay 1 / Cyclic Delay 2 / Cyclic Delay 3 — 312
- Cyclic Prefix — 313
- Filter — 314
- DAC — 315

Subcarriers

31

30

RF Part

- 321
- Beamformer — 322
- 32

Fixed Beams

**Fig. 4**

Europäisches
Patentamt

European
Patent Office

Office européen
des brevets

**EUROPEAN SEARCH REPORT**

Application Number

EP 08 15 8389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 649 287 A (FORSSEN ULF GOERAN [SE] ET AL) 15 July 1997 (1997-07-15) | 1,2,7, 10,11, 15,18-20 | INV. H04B7/04 H04B7/06 |
| Y | * abstract *<br><br>* column 2, lines 13-50 *<br>* column 3, line 61 - column 4, line 32 *<br>* figure 7 *<br>----- | 3-6, 12-14 | H04Q7/36 |
| Y | US 2006/067421 A1 (WALTON JAY R [US] ET AL) 30 March 2006 (2006-03-30)<br>* paragraphs [0021], [0025], [0058] *<br>* figures 1,3 *<br>----- | 3-5, 12-14 | |
| Y | WO 2004/068721 A (CELLETRA LTD [IL]; SHAPIRA JOSEPH [IL]; MILLER SHMUEL [IL]) 12 August 2004 (2004-08-12)<br>* page 8, line 29 - page 10, line 12 *<br>* figure 3 *<br>----- | 6 | |

| | |
|---|---|
| | TECHNICAL FIELDS SEARCHED (IPC) |
| | H04B<br>H04Q |

~~The present search report has been drawn up for all claims~~

| Place of search | Date of completion of the search | Examiner |
|---|---|---|
| Munich | 18 November 2008 | Helms, Jochen |

EPO FORM 1503 03.82 (P04C01)

Europäisches
Patentamt

European
Patent Office

Office européen
des brevets

Application Number

EP 08 15 8389

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-7, 10-15, 18-20

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 08 15 8389

---

The Search Division considers that the present European patentapplication does not comply with the
requirements of unity of invention and relates to severalinventions or groups of inventions, namely:

1. claims: 1,2,7,10,11,15,18-20

    Independent claim 1 relates to a method for transmitting
broadcast info, characterized in that the method comprises:
introducing delay diversity to the broadcast info symbols,
conveying the delay diversified broadcast info symbols to an
antenna array, and
transmitting the broadcast info symbols simultaneously with
narrow beams.
Independent claims 10, 18 and 20 correspond to the
subject-matter of claim 1.
Claims 2, 11 and 19 depending on claims 1, 10 and 18,
respectively, state that the narrow beams are defined by a
beamformer with a uniform linear antenna array or distinct
narrow beam antennas.

1.1. claims: 7, 15

    Claims 7 and 15 depending on claims 1 and 10, respectively,
state that the utilized beams are orthogonal and created by
using a Butler matrix.
        ---

2. claims: 3-6,12-14

    Claims 3, 6 and 15 depending on claims 1 and 10,
respectively, state that the delay diversity is accomplished
by cyclic delay diversity or phase diversity.
        ---

3. claims: 8, 9, 16, 17

    Claims 8, 9, 16, 17 state that the broadcast info symbols
are OFDM symbols of WiMAX, WiFi or 3rd GPP LTE networks or
UMTS broadcast info symbols.
        ---

Please note that all inventions mentioned under item 1, although not
necessarily linked by a common inventive concept, could be searched
without effort justifying an additional fee.

## ANNEX TO THE EUROPEAN SEARCH REPORT
## ON EUROPEAN PATENT APPLICATION NO.

EP 08 15 8389

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2008

| Patent document cited in search report | | Publication date | Patent family member(s) | | Publication date |
|---|---|---|---|---|---|
| US 5649287 | A | 15-07-1997 | AU | 714146 B2 | 23-12-1999 |
| | | | AU | 5166996 A | 16-10-1996 |
| | | | CN | 1184561 A | 10-06-1998 |
| | | | DE | 69623269 D1 | 02-10-2002 |
| | | | DE | 69623269 T2 | 06-02-2003 |
| | | | EP | 0818059 A1 | 14-01-1998 |
| | | | JP | 11502986 T | 09-03-1999 |
| | | | JP | 2007202190 A | 09-08-2007 |
| | | | RU | 2155460 C2 | 27-08-2000 |
| | | | WO | 9630964 A1 | 03-10-1996 |
| US 2006067421 | A1 | 30-03-2006 | NONE | | |
| WO 2004068721 | A | 12-08-2004 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006021228 A